# EUROPEAN PATENT SPECIFICATION

(11) **EP 1 566 558 B1**
(45) Date of publication and mention of the grant of the patent: **07.04.2010**
(21) Application number: 05003621.9
(22) Date of filing: 19.02.2005
(51) Int. Cl.: F16D 13/64

(54) **Power transmitting apparatus**
Apparat zur Leistungsübertragung
Appareil de transmission de puissance

(30) Priority: 23.02.2004 JP 2004045616
(43) Date of publication of application: 24.08.2005
(73) Proprietor: KABUSHIKI KAISHA F.C.C., Inasa-gun, Shizuoka (JP)
(72) Inventor: Sugita, Norihiro, Inasa-gun Shizuoka (JP); Kataoka, Makoto, Inasa-gun Shizuoka (JP); Kosuga, Tomokatsu, Inasa-gun Shizuoka (JP); Egawa, Ryo, Inasa-gun Shizuoka (JP)
(74) Representative: Cohausz & Florack

(56) References cited:
- EP-A- 1 234 993
- FR-A- 890 310
- US-A- 3 094 194
- US-A- 5 094 331

## Description

### BACKGROUND OF THE INVENTION

### Field of the Invention

The present invention relates to a power transmitting apparatus for arbitrarily transmitting or cutting off a rotational force of the input member to or from the output member.

### Description of Background Art

In general, the power transmission apparatus for a vehicle has an input member connected to an engine and transmission, an output member selectively connected to selectively driven wheels (e.g. front wheels), and clutch members connected to the output member, and the power can be transmitted by pressure-contacting a plurality of driving clutch plates mounted on the input member and a plurality of driven clutch plates mounted on a clutch member and can be cut off by releasing them.

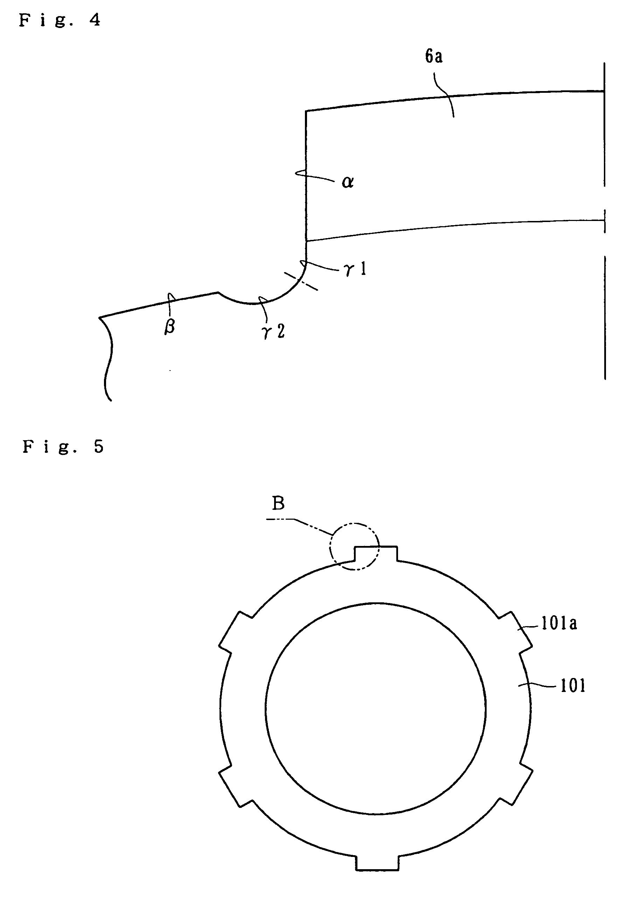

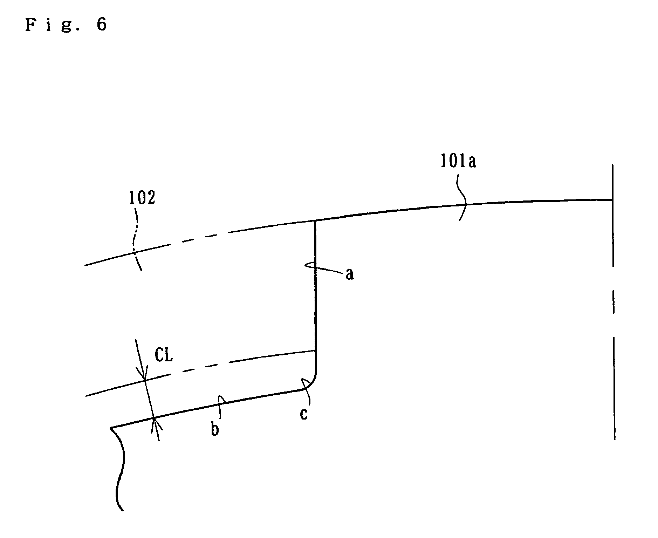

As shown in Fig. 5 a driving clutch plate 101 used in a power transmitting apparatus of the prior art has a substantially annular configuration and is formed with a plurality of projections 101a projected radially outward from the periphery of the annular body at an equidistant each other. The driving clutch plate 101 usually has as shown in Fig. 6 a linear projected wall surface "a" forming an upstanding surface of the projections 101a and adapted to be engaged with a clutch housing 102, a peripheral surface "b" of the substantially annular body, and a connecting surface "c" having an arcuate configuration of a predetermined curvature and connecting the projected wall surface "a" and the peripheral surface "b".

However since the projected wall surface "a" and the peripheral surface "b" is connected by a connecting surface "c" without any undercut, a large clearance "CL" between the housing 102 and the peripheral surface "b" is required in order to avoid the interference between the housing 102 and the driving clutch plate when the driving clutch plate is assembled onto the clutch housing 102 such that the substantially linear projected wall surface "a" of the driving clutch plate intimately contacts the clutch housing 102. The presence of the large clearance "CL" causes a problem of increase of radial size of the power transmitting apparatus. On the contrary, it is possible to reduce the clearance "CL" and avoid the interference between the housing and the driving clutch plate, if the radius of curvature of the connecting surface "c" is reduced (i.e. the curvature is enlarged). However the reduction of the radius of curvature of the connecting surface "c" causes the stress concentration in the connecting surface "c" and thus reduction of strength of the driving clutch plate. Accordingly it is impossible in the power transmission apparatus of the prior art to simultaneously achieve the size reduction and the improvement of strength of the driving clutch plate.

A power transmitting apparatus with all the features of the preamble of claim 1 is known from FR-A-890 310. However, the clutch plates shown in this prior art have projections, the protected wall surfaces of which are radially widened towards their ends. This leads to a stress concentration in the bottom areas of those projections.

A multiple disc brake assembly is known from EP-A1-1234 993, wherein the planar plates of this assembly having projections arranged in the planes of the plates. The peripheral surfaces of the plates and the projections respectively are connected by means of connecting surfaces, whereby the connecting surfaces are smoothly merged into the peripheral surface of the projections and from an undercut radially inward in respect to the peripheral surfaces of the plates at the same time. Further, the connecting surfaces comprise two surface parts having different curvatures.

### SUMMARY OF THE INVENTION

It is, therefore, an object of the present invention to provide a power transmitting apparatus which can simultaneously achieve the reduction in radial size and the improvement of strength of the driving clutch plate. Moreover, the stress concentration in the driving clutch plate should be reduced.

For achieving the object of the present invention above, there is provided according to the present invention, a power transmitting apparatus comprising a clutch housing rotatable together with an input member; a plurality of driving clutch plates each having projections projected radially outward from the periphery of a body of the driving clutch plate for engaging the clutch housing to rotate together with it; a clutch member connected to an output member and having a plurality of driven clutch plates alternately arranged between the driving clutch plates; and a pressure plate mounted on the clutch member moveably in an axial direction of the clutch member for carrying out the pressure-contact or release of the driving clutch plates relative to the driven clutch plates via the axial movement of the driving clutch plates relative to the clutch member where a rotational force inputted to the input member can be transmitted to or cut off from the output member via the pressure-contact or release between the driving clutch plates and driven clutch plates, wherein each of the driving clutch plates has a peripheral surface, projected wall surfaces of the projections, and connecting surfaces each connecting each of the projected wall surfaces and the peripheral surface, and that each of the connecting surfaces is an arcuate surface smoothly merged into the projected wall surface and forms an undercut recessed radially inward from the periphery of the driving clutch plate, characterized in that the connecting surface comprises a first connecting concave surface extending from the bottom end of the projected wall surface and having a predetermined curvature, and a second connecting concave surface extending from the first connecting concave surface and having another predetermined curvature different from that of the first concave connecting surface.

According to the power transmitting apparatus of the present invention, the connecting surfaces have first and second connecting concave surfaces comprising curvatures different from each other. Thus it is possible to simultaneously achieve the improvement of strength of the driving clutch plate and the reduction of stress concentration within the clutch plate.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view of a power transmitting apparatus of an embodiment of the present invention;
Fig. 2 is a plan view of a driving clutch plate of the prior art;
Fig. 3 is an enlarged view of a portion encircled by a circle A in Fig. 2;
Fig. 4 is an enlarged view of a driving clutch plate of a preferred embodiment;
Fig. 5 is a plan view of a driving clutch plate of the prior art; and
Fig. 6 is an enlarged view of a portion encircled by a circle B in Fig. 5.

### DESCRIPTION OF THE PREFERRED EMBODIMENTS

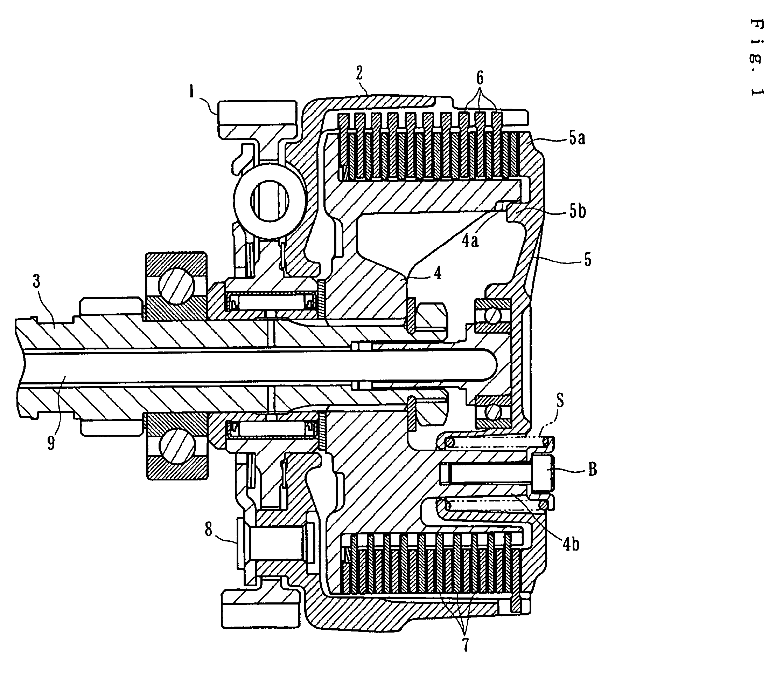

Preferred embodiments of the present invention will be hereinafter described with reference to the accompanied drawings.
A power transmitting apparatus of a first embodiment of the present invention is mounted on a vehicle such as a four wheel driving vehicle for arbitrarily transmit or cut off the driving force of an engine and transmission to or from front wheels. As shown in Fig. 1, the power transmitting apparatus of the present invention comprises a clutch housing 2 on which a gear 1 as an input member is mounted, a clutch member 4 connected to a shaft 3 as an output member, a pressure plate 5 mounted on the clutch member 4 at the right end (in view of Fig. 1) thereof, driving clutch plates 6 connected to the clutch housing 2, and driven clutch plates 7 connected to the clutch member 4.

The gear 1 is rotated around the shaft 3 by a driving force (rotational force) transmitted from the engine and connected to the clutch housing 2 via rivets 8 etc. The clutch housing 2 is a cylindrical casing member opened at the right end thereof and provided with a plurality of driving clutch plates 6 on the inner peripheral surface thereof. Each of the driving clutch plates 6 is formed as a substantially annular plate member and engaged with the clutch housing 2 and rotated together therewith.

The clutch member 4 is formed as a cylindrical casing member opened at the right end thereof and adapted to be received within the clutch housing 2. The shaft 3 passes through the center of the clutch member 4 and is connected thereto via a spline connection and thus is rotated by the clutch member 4. Axially extending splines are formed on the outer peripheral surface of the clutch member 4 and the driven clutch plates 7 are fitted on the splines.

These driven clutch plates 7 are alternately arranged with the driving clutch plates 6 so that the clutch plates 6 and 7 adjacent each other can be pressure-contacted or released. That is, both clutch plates 6 and 7 are allowed to be slid axially of the clutch member 4 and thus pressure-contacted each other when pushed by the pressure plate 5 toward a left direction (in view of Fig. 1) so that the rotational force can be transmitted to the clutch member 4 and the shaft 3. On the contrary, when releasing the pressure of the pressure plate 5, they are also released each other and the clutch member 4 cannot follow the rotation of the clutch housing 2 and is stopped so that no power cannot be transmitted to the shaft 3.

In this case, it should be noted that "release" of the clutch plates 6 and 7 means a condition where the pressure-contact is lost and thus the clutch member 4 does not follow the rotation of the clutch housing 2 (i.e. a condition where the driving clutch plates 6 slide on the driven clutch plates 7) and thus it is out of the question whether there is any clearance between the clutch plates 6 and 7.

The pressure plate 5 has a substantially disc configuration such as closing the opening (the right end) of the clutch member 4 and is normally urged toward a left direction by the clutch spring S. That is, the urging of the pressure plate 5 is achieved by the clutch spring S arranged between a boss portion 4b projected from the clutch member 4 and extending through the pressure plate 5 and a head of a bolt B screwed in the boss portion 4b.

Thus the peripheral edge portion 5a of the pressure plate 5 abuts the clutch plate 7 positioned at most right position and the clutch plates 6 and 7 are normally pressure-contacted each other by the clutch spring S. Accordingly, the clutch housing 2 and the clutch member 4 are kept in a normally connected condition so that the gear 1 can rotate the shaft 3 when the rotational force is inputted to the gear 1.

However the pressure-contact force between the driving and driven clutch plates 6 and 7 can be released when a driver of vehicle operates to move a push rod 9 toward a right direction (in view of Fig. 1) so as to move the pressure plate 5 toward a right direction against the urging force of the clutch spring S. When the pressure-contacting force between the driving and driven clutch plates 6 and 7 is released, the rotational force inputted to the gear 1 and the clutch housing 2 is cut off and thus not transmitted to the shaft 3. That is, the pressure-contact or the release between the plates 6 and 7 can be achieved by the axial movement of the push rod 9 and accordingly the pressure plate 5.

The pressure plate 5 is formed with several stopper portions 5b projected therefrom for limit rotation of the pressure plate 5 relative to the clutch member 4. Each stopper portion 5b has a projected configuration and is fitted in a recess 4a formed on the inner peripheral surface of the clutch member 4 to limit the relative rotation between the pressure plate 5 and the clutch member 4.

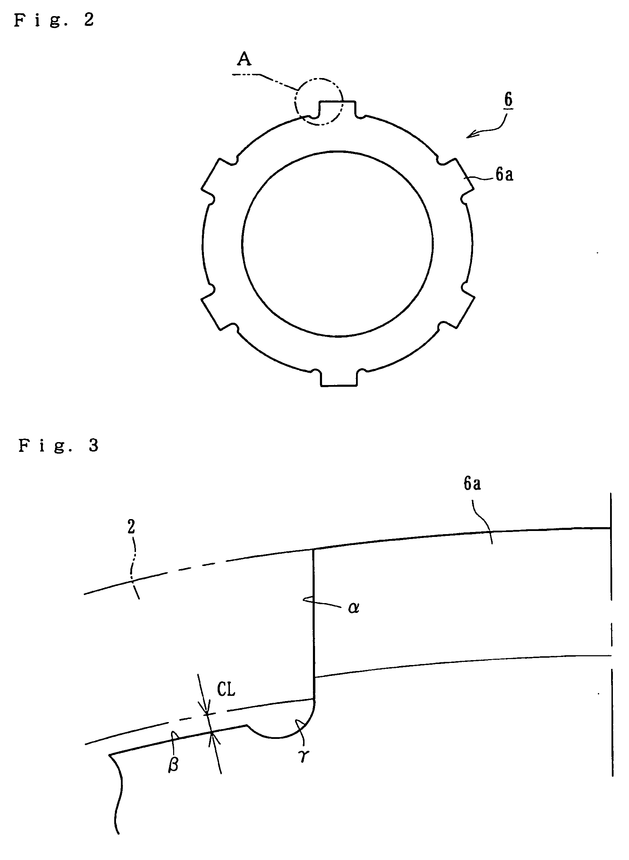

As shown in Fig. 2, the driving clutch plate 6 of the prior art is formed with a plurality of projections 6a projected radially outward from the periphery of the driving clutch plate 6 and adapted to be engaged with the clutch housing 2 in the rotational direction. As can be seen in more detail in Fig. 3 showing a portion near the projection 6a encircled by a circle "A" in Fig. 2, the encircled portion is formed by a peripheral surface β of the body of the driving clutch plate 6, a projected wall surface α forming an upstanding surface of the projections 6a, and a connecting surface γ connecting the projected wall surface α and the peripheral surface β.

The connecting surface γ extends radially inward from the periphery β of the driving clutch plate 6 and forms a notch i.e. an undercut at the root of the projection 6a which is recessed radially inward from the periphery β of the driving clutch plate 6. In addition the connecting surface is an arcuate surface smoothly merged into the projected wall surface α. The provision of the connecting surface γ of undercut makes it possible to reduce a clearance CL between the clutch housing 2 and the peripheral surface β of the driving clutch plate 6 and to reduce the whole size of the power transmitting apparatus especially the radial dimension thereof.

Furthermore, since the connecting surface γ is formed as the undercut surface, it is possible to adopt a smaller curvature (i.e. larger radius of curvature) as compared with the connecting surface "c" without any undercut of the prior art (Fig. 6) having a large curvature (i.e. small radius of curvature) and thus to reduce the stress concentration. This improves the strength of the driving clutch plate 6.

Fig. 4 shows a preferred embodiment of the driving clutch plate of the present invention. In this embodiment, the connecting surface comprises a first connecting surface γ 1 extending from the bottom end of the projected wall surface α and having a predetermined curvature, and a second connecting surface γ 2 extending from the first connecting surface γ 1 and having another predetermined curvature different from that of the first connecting surface γ 1. Also in this case, it is necessary that the second connecting surface γ 2 extends radially inward from the periphery β of the driving clutch plate and forms an undercut.

It is preferable that the boundary between the connecting surface γ or first connecting surface γ 1 and the projected wall surface α is smoothly connected and does not form any angle. If any angle is formed therein, it is preferable that it is an obtuse angle. When any obtuse angle is formed, it is necessary to extend the position of the boundary on the wall surface α radially inward toward the periphery P in order to reduce the size in radial direction of the power transmitting apparatus. The term "smoothly connected" used herein includes meanings not only the case wherein no angle is formed in the boundary but the case wherein an obtuse angle is formed when the wall surface α is extended radially inward.

The power transmitting apparatus of the present invention can be applied to a power transmitting apparatus of multiple disc clutch type used to any kinds of vehicles such as a motorcycle, a three or four wheeled buggy, and machines for multiple use.

The power transmitting apparatus of the present invention can be applied to those having other functions or other outline configurations if the power transmitting apparatus is that where the connecting surface is arcuate surface smoothly connected to the projected wall surface and formed as an undercut extending radially inward from the periphery of the driving clutch plate.

## Claims

1. A power transmitting apparatus comprising a clutch housing (2) rotatable together with an input member (1); a plurality of driving clutch plates (6) each having projections (6a) projecting radially outward from the periphery of the driving clutch plate (6) for engaging the clutch housing (2) to rotate together with it; a clutch member (4) connected to an output member (3) and having a plurality of driven clutch plates (7) alternately arranged between the driving clutch plates (6); and a pressure plate (5) mounted on the clutch member (4) moveably in an axial direction of the clutch member (4) for carrying out the pressure-contact or release of the driving clutch plates (6) relative to the driven clutch plates (7) via the axial movement of the driving clutch plates (6) relative to the clutch member (4) where a rotational force inputted to the input member (1) can be transmitted to or cut off from the output member (3) via the pressure-contact or release between the driving clutch plates (6) and driven clutch plates (7), wherein each of the driving clutch plates (6) is substantially planar and defines a plane wherein the projections (6a) being in that plane, wherein each driving clutch plate (6) has a peripheral surface (β), a pair of projected wall surfaces (α) of the projections (6a), and a pair of connecting surfaces (γ) one on each side of said projection (6a), wherein each connecting surface (γ) connecting the projected wall surfaces (α) and the peripheral surface (β), and wherein each of the connecting surfaces (γ) is an arcuate surface smoothly merged into the projected wall surface (α) and forms an undercut recessed radially inward from the periphery (β) of the driving clutch plate (6), **characterized in that** the connecting surface (γ) comprises a first connecting concave surface (γ1) extending from the bottom end of the projected wall surface (α) and having a predetermined curvature, and a second connecting concave surface (γ2) extending from the first connecting concave surface (γ1) and having another predetermined curvature different from that of the first connecting concave surface (γ1).

2. Power transmitting apparatus according to claim 1,
wherein a shaft (3) passes through the centre of the clutch member (4) and is connected thereto via a spline connection in order to rotate the shaft (3) by the clutch member (4).

3. Power transmitting apparatus according to claim 1 or 2, wherein the pressure plate (5) has a substantially disc configuration.

4. Power transmitting apparatus according to one of claims 1 to 3,
wherein the pressure plate (5) is formed with several stopper portions (5b) projected therefrom to limit rotation of the pressure plate (5) relative to the clutch member (4).

5. Power transmitting apparatus according to claim 4,
wherein each stopper portion (5b) has a projected configuration and is fitted in a recess (4a) formed on the inner peripheral surface of the clutch member (4).

## Patentansprüche

1. Kraftübertragungsvorrichtung, die Folgendes umfasst: ein Kupplungsgehäuse (2), das zusammen mit einem Antriebselement (1) drehbar ist; mehrere Antriebskupplungslamellen (6), die jeweils Vorsprünge (6a) aufweisen, die vom Umfang der Antriebskupplungslamelle (6) radial nach außen hervorstehen, um das Kupplungsgehäuse (2) in Eingriff zu nehmen, um sich zusammen mit ihm zu drehen; ein Kupplungselement (4), das mit einem Abtriebselement (3) verbunden ist und mehrere angetriebene Kupplungslamellen (7) aufweist, die im Wechsel zwischen den Antriebskupplungslamellen (6) angeordnet sind; und eine Druckplatte (5), die so an dem Kupplungselement (4) montiert ist, dass sie sich in einer axialen Richtung des Kupplungselements (4) bewegen kann, um den Druckkontakt oder das Lösen der Antriebskupplungslamellen (6) relativ zu den angetriebenen Kupplungslamellen (7) über die axiale Bewegung der Antriebskupplungslamellen (6) relativ zu dem Kupplungselement (4) auszuführen, wobei eine an das Antriebselement (1) angelegte Rotationskraft über den Druckkontakt oder das Lösen zwischen den Antriebskupplungslamellen (6) und den angetriebenen Kupplungslamellen (7) an das Abtriebselement (3) übertragen oder von dem Abtriebselement (3) abgekoppelt werden kann, wobei jede der Antriebskupplungslamellen (6) im Wesentlichen planar ist und eine Ebene definiert, wobei sich die Vorsprünge (6a) in dieser Ebene befinden, wobei jede Antriebskupplungslamellen (6) eine Umfangsfläche (β), ein Paar hervorstehender Wandflächen (α) der Vorsprünge (6a) und ein Paar Verbindungsflächen (γ), eine auf jeder Seite des Vorsprung (6a), aufweist, wobei jede Verbindungsfläche (γ) die hervorstehenden Wandflächen (α) und die Umfangsfläche (β) verbindet, und wobei jede der Verbindungsflächen (γ) eine Bogenfläche ist, die sanft in die hervorstehende Wandfläche (α) übergeht und eine Hinterschneidung bildet, die vom Umfang (β) der Antriebskupplungslamelle (6) aus radial nach innen vertieft ist, **dadurch gekennzeichnet, dass** die Verbindungsfläche (γ) eine erste konkave Verbindungsfläche (γ1) umfasst, die sich vom unteren Ende der hervorstehenden Wandfläche (α) erstreckt und eine vorgegebene Krümmung aufweist, und eine zweite konkave Verbindungsfläche (γ2) umfasst, die sich von der ersten konkaven Verbindungsfläche (γ1) erstreckt und ebenfalls eine vorgegebene Krümmung aufweist, die sich von der Krümmung der ersten konkaven Verbindungsfläche (γ1) unterscheidet.

2. Kraftübertragungsvorrichtung nach Anspruch 1, wobei eine Welle (3) durch die Mitte des Kupplungselements (4) hindurch verläuft und mit diesem über ein Keilprofil verbunden ist, um die Welle (3) durch das Kupplungselement (4) anzutreiben.

3. Kraftübertragungsvorrichtung nach Anspruch 1 oder 2, wobei die Druckplatte (5) eine im Wesentlichen scheibenförmige Konfiguration aufweist.

4. Kraftübertragungsvorrichtung nach einem der Ansprüche 1 bis 3, wobei die Druckplatte (5) mit mehreren Stopperabschnitten (5b) ausgebildet ist, die von dort hervorstehen, um eine Rotation der Druckplatte (5) relativ zu der Kupplungselement (4) zu begrenzen.

5. Kraftübertragungsvorrichtung nach Anspruch 4, wobei jeder Stopperabschnitt (5b) als ein hervorstehendes Element konfiguriert ist und in eine Vertiefung (4a) eingepasst ist, die in der Innenumfangsfläche des Kupplungselements (4) ausgebildet ist.

## Revendications

1. Appareil de transmission de puissance comprenant un carter d'embrayage (2) pouvant tourner conjointement avec un organe d'entrée (1) ; plusieurs plateaux d'embrayage meneurs (6) possédant chacun des saillies (6a) ressortant radialement vers l'extérieur à partir de la périphérie du plateau d'embrayage meneur (6), pour entrer en contact avec le carter d'embrayage (2), pour tourner avec lui ; un organe d'embrayage (4) relié à un organe de sortie (3) et possédant plusieurs plateaux d'embrayage menés (7), disposés de manière alternée entre les plateaux d'embrayage meneurs (6) ; et un plateau de pression (5) monté sur l'organe d'embrayage (4), de manière mobile dans une direction axiale de l'organe d'embrayage (4), pour réaliser le contact avec pression, ou la libération des plateaux d'embrayage meneurs (6) par rapport aux plateaux d'embrayage menés (7), par l'intermédiaire du mouvement axial des plateaux d'embrayage meneurs (6) par rapport à l'organe d'embrayage (4), une force de rotation imprimée à l'organe d'entrée (1) pouvant être transmise, ou non, à partir de l'organe de sortie (3) par l'intermédiaire du contact avec pression, ou de la libération, entre les plateaux d'embrayage meneurs (6) et les plateaux d'embrayage menés (7), dans lequel chacun des plateaux d'embrayage meneurs (6) est sensiblement plan et définit un plan dans lequel se trouvent les saillies (6a), dans lequel chaque plateau d'embrayage meneur (6) possède une surface périphérique (β), une paire de surfaces de paroi saillantes (α) des saillies (6a), et une paire de surfaces de liaison (γ), une de chaque côté de ladite saillie (6a), chaque surface de liaison (γ) reliant les surfaces de paroi saillantes (α) et la surface périphérique (β), et chacune des surfaces de liaison (γ) étant une surface arquée se raccordant progressivement à la surface de paroi saillante (α) et formant un dégagement en retrait radialement vers l'intérieur par rapport à la périphérie (β) du plateau d'embrayage meneur (6), **caractérisé en ce que** la surface de liaison (γ) comprend une première surface concave de liaison (γ1) s'étendant à partir de l'extrémité inférieure de la surface de paroi saillante (α) et présentant une courbure prédéterminée, et une seconde surface concave de liaison (γ2) s'étendant à partir de la première surface concave de liaison (γ1) et présentant une autre courbure prédéterminée, différente de celle de la première surface concave de liaison (γ1).

2. Appareil de transmission de puissance selon la revendication 1, dans lequel un arbre (3) passe par le centre de l'organe d'embrayage (4) et y est relié par l'intermédiaire d'une liaison à cannelures, en vue de faire tourner l'arbre (3) par l'intermédiaire de l'organe d'embrayage (4).

3. Appareil de transmission de puissance selon la revendication 1 ou 2, dans lequel le plateau de pression (5) présente une configuration sensiblement en disque.

4. Appareil de transmission de puissance selon l'une quelconque des revendications 1 à 3, dans lequel le plateau de pression (5) est pourvu de plusieurs portions de butée (5b) qui en ressortent pour limiter une rotation du plateau de pression (5) par rapport à l'organe d'embrayage (4).

5. Appareil de transmission de puissance selon la revendication 4, dans lequel chaque portion de butée (5b) présente une configuration en saillie et s'ajuste dans un évidement (4a) formé à la surface périphérique interne de l'organe d'embrayage (4).
